# FASCICULE DE BREVET EUROPEEN

(11) **EP 1 952 580 B1**
(45) Date de publication et mention de la délivrance du brevet: **04.05.2011**
(21) Numéro de dépôt: 06831352.7
(22) Date de dépôt: 17.11.2006
(51) Int. Cl.: H04L 12/26, H04M 1/82, G06K 9/00, G06T 7/00

(54) **PROCÉDÉ DE TEST DE RÉSEAU DE COMMUNICATION PAR L'INTERMÉDIAIRE D'UN TERMINAL**
VERFAHREN ZUM PRÜFEN EINES KOMMUNIKATIONSNETZES MITTELS EINES ENDGERÄTS
METHOD FOR TESTING A COMMUNICATION NETWORK BY MEANS OF A TERMINAL

(30) Priorité: 23.11.2005 FR 0553574
(43) Date de publication de la demande: 06.08.2008
(73) Titulaire: Ercom Engineering Réseaux Communications, 78140 Vélizy-Villacoublay (FR)
(72) Inventeur: RIBLE, Frédéric, F-91620 Nozay (FR)
(74) Mandataire: Marconnet, Sébastien
(86) Numéro de dépôt international: PCT/FR2006/051190
(87) Numéro de publication internationale: WO 2007/060358

(56) Documents cités:
- EP-A- 0 366 235
- FR-A- 2 805 429

## Description

La présente invention concerne un procédé pour tester la qualité d'un réseau de communications, ce test étant réalisé en analysant le contenu de l'écran d'un terminal échangeant des informations via ce réseau de communications.

Avec le développement de nouvelles générations de téléphones mobiles, les opérateurs de téléphonie mobile sont maintenant en mesure d'offrir de nombreux services permettant à des utilisateurs d'échanger des images ou des vidéos, ou encore d'accéder à des services de type WAP ou Internet par l'intermédiaire de leurs téléphones.

Afin de proposer le meilleur service possible à leurs clients, il est utile pour ces opérateurs de pouvoir tester leur réseau afin de disposer d'indicateurs sur la qualité perçue par les utilisateurs lors, notamment, de l'affichage sur l'écran de leur téléphone de pages Internet ou de vidéos. Ces indicateurs sont, par exemple, le temps d'affichage d'une image sur l'écran, ou la qualité visuelle de cette image.

A l'heure actuelle, de tels tests sont effectués de manière « manuelle » par des opérateurs de test équipés de téléphones mobiles standard. Ce mode de test présente de nombreux inconvénients, notamment en terme de coût, mais également en terme d'objectivité des résultats.

Par ailleurs, il existe des procédés de tests automatiques pour les téléphones mobiles, notamment des applications embarquées dans des ordinateurs de type PC ; mais ces procédés permettent uniquement de tester la fonctionnalité modem des téléphones, par exemple en mesurant un nombre de paquets échangés, ou un temps de réponse. Ces mesures quantitatives ne peuvent donc pas être utilisées pour rendre compte de la qualité réelle perçue par un utilisateur, par exemple lorsqu'il essaie d'accéder à une page Internet.

En complément de ces procédés, des outils automatiques de validation d'applications mobiles ont été développés, mais ces outils sont utilisés pour tester les téléphones mobiles eux-mêmes, et non un réseau de communications par lequel transiteraient des données envoyées sur le téléphone. Ainsi, les procédés de test mis en oeuvre dans ces outils sont dépendants du téléphone mobile utilisé, et notamment du système d'exploitation installé sur ce téléphone. Ces outils ne peuvent donc pas être utilisés tels quels pour tester un réseau de télécommunications, car ils n'ont été développés que pour certains types de téléphones mobiles et ne sont pas facilement adaptables aux autres téléphones.

De plus, ces outils de validation ne sont généralement pas intégrés dans le téléphone mobile lui-même, et ne peuvent donc pas être utilisés en permanence puisqu'ils représentent une gêne pour les utilisateurs.

FR A 2 805 429 décrit un procédé de contrôle de la qualité d'images numériques codées par blocs de pixels dans lesquels un phénomène de faux contours est susceptible d'être engendré à la reconstruction. Le procédé consiste à calculer (A) un vecteur vitesse moyen d'image pour des éléments d'images représentés par au moins une composante de luminance ou de chrominance, puis à détecter (B) dans au moins une direction de référence de chaque image courante In un effet de faux contour sur critère de discrimination de la différence de composantes de luminance ou de chrominance entre pixels voisins de groupes de pixels adjacents, et (C) à calculer un coefficient de visibilité Kv d'au moins une image courante In à partir de la valeur du vecteur vitesse moyen d'image et de critères psychovisuels relatifs à l'existence de l'effet de faux contours dans la direction de référence.

L'invention vise à remédier à au moins l'un des inconvénients cités précédemment. L'invention s'applique dans le domaine des réseaux de téléphonie mobile, mais également dans tout autre réseau de communication, par exemple filaire. En effet, les téléphones filaires ou autres terminaux de communication tels que des décodeurs pour la télévision mettent également en oeuvre des applications, par exemple la visiophonie, pour lesquelles il peut être intéressant d'effectuer des tests au niveau de la qualité perçue par les utilisateurs.

L'invention concerne un procédé de test de réseau de communications par l'intermédiaire d'un terminal, le terminal étant doté d'un écran et échangeant des informations via le réseau de communications. Ce procédé comprend les étapes suivantes :
- l'étape de récupérer périodiquement les valeurs de tout ou partie des pixels de l'écran du terminal,
- l'étape de calculer, à partir de ces valeurs de pixels, un ou plusieurs paramètre(s) représentatif(s) du contenu de l'écran, et
- l'étape de transférer ce (ou ces) paramètre(s) vers un moyen de sauvegarde et/ou d'analyse.

Le procédé selon l'invention permet, en récupérant les valeurs de pixels de l'écran, de rendre compte de la réalité perçue par un utilisateur regardant l'écran.

Le terminal est, par exemple, un terminal de téléphonie mobile.

De préférence, pour tester n'importe quel réseau avec n'importe quel terminal tel qu'un téléphone mobile, les paramètres calculés sont des paramètres indépendants du terminal utilisé pour réaliser les tests, ou de l'application pour laquelle ce terminal est utilisé.

Le choix des paramètres à calculer peut, par exemple, être effectué par un opérateur de téléphonie mobile en fonction des fonctionnalités de son réseau qu'il souhaite tester.

Selon les paramètres choisis, il peut être utile de parcourir l'image selon un ordre ou un autre, ou encore de ne pas récupérer tous les pixels.

Ainsi, dans une réalisation, pour récupérer les valeurs de pixels, on parcourt l'écran du terminal selon un mode de parcours compris dans le groupe comprenant : parcours selon les lignes verticales, parcours selon les lignes horizontales, parcours selon des zones rectangulaires et parcours sous-échantillonné dans lequel on ne récupère les valeurs que d'un pixel sur n, où n est un nombre entier positif.

Par exemple, si un opérateur désire connaître le temps d'affichage d'une image sur l'écran, et qu'il sait qu'une image s'affiche ligne par ligne, il peut choisir de ne récupérer les valeurs que d'une colonne de pixels, chaque pixel de cette colonne étant représentatif d'une ligne de l'écran.

De la même façon, l'opérateur peut vouloir tester le temps d'accès à une page Internet dans laquelle est inséré un symbole particulier, tel qu'un sablier, variant en fonction de l'état d'avancement de l'affichage. Dans ce cas, il est suffisant de récupérer les valeurs des pixels se trouvant dans la zone de l'écran dans laquelle se trouve ce symbole.

Les terminaux, notamment des téléphones mobiles, utilisés pour réaliser ces tests sont munis de système d'exploitation, par exemple de type « Microsoft Windows ». Ces systèmes comprennent généralement des outils d'analyse d'image, qui peuvent être utilisés par le procédé de test. Ainsi, dans une réalisation, le procédé utilise, lors de l'étape de calcul, des algorithmes de traitement d'image utilisés à d'autres fins dans le terminal, notamment pour déterminer les couleurs des pixels de l'écran. Dans une variante, le procédé utilise des algorithmes connus pour la reconnaissance et l'identification d'images.

La détermination des couleurs peut être un critère particulièrement pertinent pour évaluer la qualité visuelle d'une image affichée sur un écran.

Un des moyens pour évaluer la qualité d'une image, est de comparer cette image avec une image de référence correspondant à ce que l'on souhaite obtenir. A cet effet, dans une réalisation, l'étape de calcul comprend le calcul d'un taux de ressemblance de l'image affichée sur l'écran par rapport à une image de référence

Un tel calcul est basé sur la comparaison des valeurs de pixels récupérés avec les valeurs des pixels correspondants dans l'image de référence. Cette comparaison peut, dans une réalisation, être réalisée périodiquement afin de faire apparaître une évolution de l'image.

Ce calcul peut être réalisé en utilisant des algorithmes de traitement d'images existants, par exemple déjà intégrés dans le terminal, notamment un téléphone mobile, ou en utilisant un algorithme tel que le suivant :

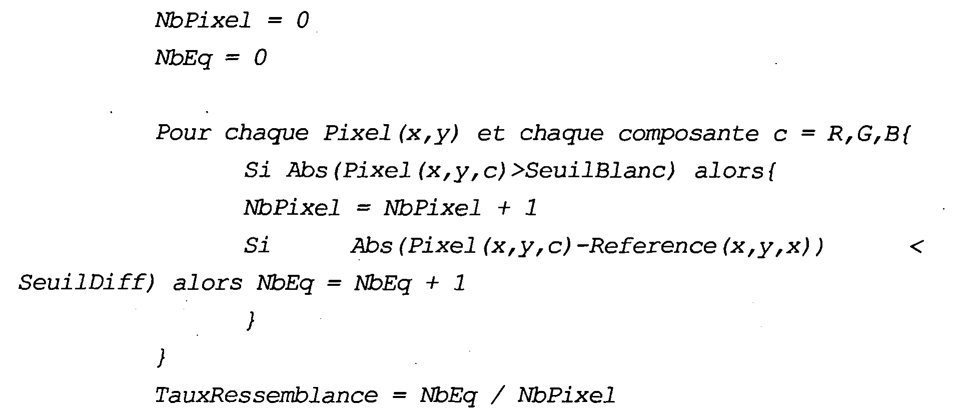

Afin d'obtenir des résultats les plus représentatifs possibles de la réalité, le calcul du taux de ressemblance tient compte, dans une réalisation, d'une tolérance vis-à-vis de faibles variations dans la qualité des images.

En effet, une image peut avoir subi, lors de son transfert, une faible dégradation qui sera invisible à l'oeil nu mais qui aura eu pour effet de faire varier légèrement la valeur d'un ou plusieurs pixels. Le procédé de test étant destiné à la mesure de qualité perçue réellement par un utilisateur, une telle dégradation ne doit pas obligatoirement être considérée comme gênante et doit donc éventuellement ne pas être prise en compte lors du calcul de la vraisemblance.

Les images de référence sont, par exemple, communiquées par l'opérateur qui connait les applications qu'il souhaite tester et donc les images qui doivent être obtenues.

En variante, le procédé comprend une étape d'apprentissage au cours de laquelle les différents types d'images reçues par un terminal, notamment un téléphone sont répertoriées afin de constituer des images de référence.

Par exemple, lorsqu'un utilisateur navigue sur Internet en utilisant un téléphone mobile et que la communication est interrompue subitement, son téléphone va afficher une page contenant un texte du type « Navigation interrompue ». Lors du premier affichage de cette page, il peut être utile de la répertorier en tant qu'image de référence, afin de la reconnaître lors de ses prochaines apparitions. Ceci peut permettre, par la suite, une analyse plus détaillée des évènements ayant lieu lors d'une navigation sur Internet par le biais du téléphone.

Le calcul du taux de ressemblance tel que défini ci-dessus est utile pour déterminer si l'image obtenue sur l'écran correspond bien à celle que l'on souhaite, et si elle est de bonne qualité. Cependant, un autre aspect important, en terme de qualité ressentie par l'utilisateur, est le temps mis pour l'affichage de cette image. Pour évaluer ce temps, dans une réalisation, le procédé comprend l'étape de calculer, à partir du taux de ressemblance, un taux de remplissage de l'écran.

En effet, si le taux de ressemblance est égal à 50%, cela peut signifier soit que l'image est très dégradée, soit que l'image est correcte mais qu'elle n'est affichée, à l'instant de la mesure, que sur une moitié de l'écran.

Ainsi, à partir de taux de ressemblance calculés à différents instants, on peut déduire des taux de remplissage de l'écran et éventuellement calculer une vitesse d'affichage des images sur le terminal.

A cet effet, dans une réalisation, le procédé comprend l'étape de déterminer une limite temporelle pour la récupération des valeurs de pixels servant au calcul du (ou des) paramètre (s) .

De plus, dans une réalisation, l'étape de calcul est effectuée périodiquement afin d'établir une variation du (ou des) paramètre(s) dans le temps.

Ainsi, on peut tracer des courbes permettant de visualiser l'évolution des différents paramètres au cours du temps.

Ces courbes et les indications sur la vitesse d'affichage peuvent permettre d'obtenir des renseignements sur les performances du réseau en terme de transfert de données représentant notamment des images fixes ou animées.

Afin d'automatiser complètement la procédure de test, le procédé comprend, dans une réalisation, une étape préliminaire consistant à envoyer au terminal des données simulant l'action d'un utilisateur sur ce terminal.

Dans une réalisation, cette étape préliminaire est effectuée par un moyen externe au terminal.

En effet, il est possible de développer pour de tels tests un « utilisateur virtuel » dont le rôle est de simuler l'appui sur les touches du terminal par un utilisateur réel.
Cet utilisateur virtuel peut, par exemple, prendre la forme d'un logiciel installé sur un ordinateur de type PC, et qui peut être paramétré pour simuler différentes utilisations réelles.

Les différents calculs de paramètres effectués lors de l'exécution du procédé peuvent être réalisés par des moyens de calculs intégrés dans le terminal, ou externes au terminal.

Le choix dépend, notamment, des conditions dans lesquelles on effectue les tests.de réseau. En effet, si les tests sont effectués, par exemple, en laboratoire, il peut être intéressant de déléguer les calculs à des moyens externes disposant d'une puissance de calcul qui ne pourrait être obtenue dans le terminal.

Par ailleurs, il peut arriver que les tests soient effectués en situation réelle, c'est-à-dire lorsqu'un utilisateur utilise effectivement le terminal, par exemple son téléphone mobile. Dans ce cas, les moyens de calcul seront généralement intégrés dans le terminal.

En revanche, même si les calculs de paramètres sont effectués dans le terminal, on préférera souvent rapatrier ces paramètres afin de les analyser, par exemple pour établir des statistiques sur la qualité du réseau.

A cet effet, dans une réalisation, le procédé comprend l'étape de transférer le (ou les) paramètres calculés vers un dispositif d'analyse externe au terminal.

D'autres caractéristiques et avantages de l'invention apparaîtront avec la description non limitative de certains de ses modes de réalisation, cette description étant effectuée à l'aide des figures sur lesquelles :
- la figure 1 représente deux configurations d'un système permettant de tester un réseau mobile en utilisant un procédé conforme à l'invention, et
- la figure 2 représente les différentes étapes d'un procédé de test conforme à l'invention.

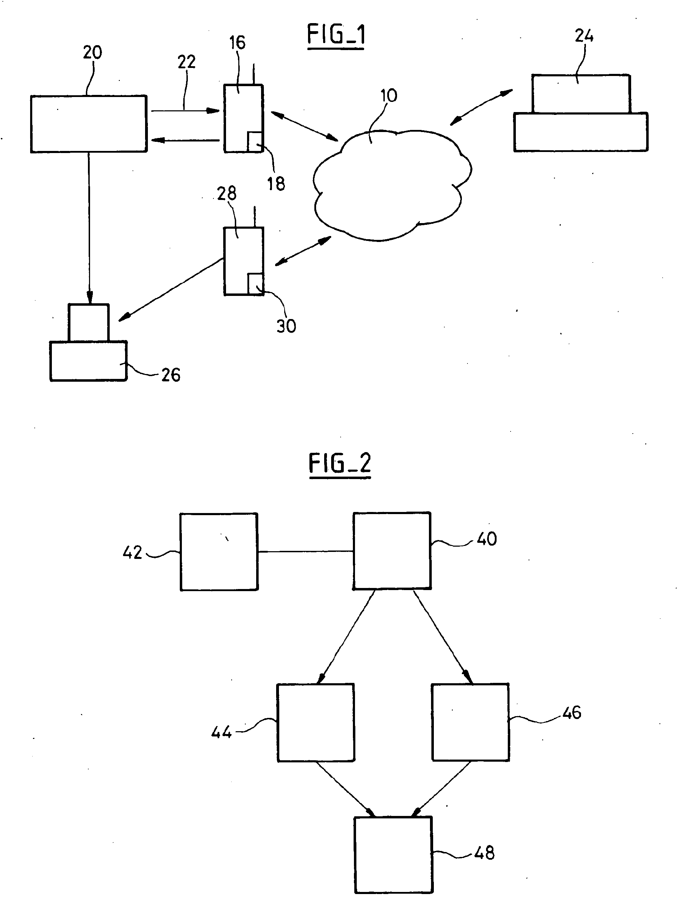

La figure 1 présente un système utilisé pour tester un réseau de communications mobile 10, par exemple un réseau de type GPRS. Ce système peut être utilisé dans deux configurations possibles : une configuration avec utilisateur virtuel, ou une configuration avec un utilisateur réel.

Dans la configuration virtuelle, les tests du réseau 10 sont effectués via un téléphone mobile 16 dans lequel est intégré un petit logiciel de commande 18. Ce logiciel de commande 18 est piloté par un utilisateur virtuel 20 chargé de simuler différentes actions effectuées par un utilisateur du téléphone. Pour cela, l'utilisateur virtuel 20 envoie au logiciel de commande des données 22 représentant l'appui sur certaines touches. Par exemple, on va tester le réseau lorsqu'un utilisateur souhaite accéder à un site Internet en utilisant la fonction « WAP » de son téléphone. On envoie donc les données correspondant aux touches sur lesquelles appuierait un utilisateur réel. Le téléphone se connecte donc, via le réseau 10, à un serveur 24 qui héberge le site Internet. Lorsque la page Internet s'affiche sur l'écran, l'utilisateur virtuel est en mesure de relever les valeurs des pixels de l'écran du téléphone 10. A partir des ces valeurs, l'utilisateur virtuel effectue différents calculs et envoie les résultats de ces calculs à un ordinateur 26 comprenant des moyens d'analyse de ces résultats.

La seconde configuration est utilisée pour tester un fonctionnement réel du téléphone, c'est-à-dire lorsqu'un utilisateur s'en sert quotidiennement. Ainsi, les tests de qualité peuvent être effectués sur les applications réellement demandées par les utilisateurs.

Dans cette configuration, le réseau 10 est testé via un téléphone 28 muni de moyens de calculs de différents paramètres. Ces calculs sont effectués notamment à partir des valeurs des pixels de l'écran, ces valeurs étant également récupérées par les moyens de calculs 30. Dans ce cas, le téléphone 28 envoie directement les résultats de ces calculs à l'ordinateur 26 pour qu'ils soient analysés.

La figure 2 présente différentes étapes d'un procédé de test, ces étapes étant par exemple effectuées par des moyens intégrés dans un utilisateur virtuel.

La première étape (40) consiste à récupérer les valeurs des pixels d'un écran 42 de téléphone portable. Pour réaliser cette récupération, on peut, par exemple, utiliser directement une fonction existante telle que la fonction « GetPixel » en environnement « Microsoft Windows ». Si une telle fonction n'existe pas dans le système d'exploitation du terminal, on peut, par exemple, récupérer les valeurs des pixels par lecture directe de la mémoire vidéo du terminal.

Selon les tests que l'on veut effectuer, on utilise un balayage selon des lignes verticales, ou selon des zones rectangulaires. On peut également balayer l'écran selon un sous échantillonnage, c'est-à-dire en analysant uniquement un pixel sur n, n étant un nombre entier.

L'étape suivante consiste à effectuer des calculs de paramètres à partir de ces valeurs de pixels récupérés. Parmi les paramètres que l'on peut calculer, on peut citer notamment le taux de remplissage de l'écran (44) ou encore l'état d'une application (46).

Dans le cas du calcul du taux de remplissage (44), on effectue une comparaison périodique des zones de l'écran balayées par rapport à une ou plusieurs images de référence. A partir de cette comparaison, on calcule un taux de ressemblance, selon un algorithme dédié, et avec une certaine tolérance vis-à-vis de faibles variations dans la qualité des images. Ce taux de ressemblance nous permet d'obtenir ensuite le taux de remplissage.

Le deuxième cas (46) concerne une utilisation du téléphone pour atteindre une application donnée. Dans ce cas, on va analyser les couleurs de certaines zones de l'écran pour déterminer l'avancement du transfert des données représentant l'application. Par exemple, certaines applications sont telles qu'un symbole d'une couleur particulière apparaît dans une zone déterminée de l'écran pendant le transfert. Dans ce cas, on peut détecter l'état du transfert en analysant tout ou partie des pixels de cette zone ; si la combinaison de couleurs de ces pixels est rouge, cela signifie que le transfert est en cours, alors que si elle est verte, cela signifie que le transfert est terminé. D'autres applications disposent d'une barre graphique indiquant l'avancement du transfert, et dans ce cas on peut mesurer cet avancement en mesurant la longueur de cette barre, cette mesure de longueur étant effectuée par exemple en relevant le nombre de pixels ayant une certaine couleur.

Une fois les paramètres calculés, ils sont transférés (48) vers des moyens de stockage et/ou d'analyse, permettant notamment le calcul de différents indicateurs de la qualité du réseau.

## Revendications

1. Procédé de test d'un réseau de communications (10) par l'intermédiaire d'un terminal (16, 28), le terminal (16, 28) étant doté d'un écran (42) et échangeant des informations via le réseau de communications (10), ce procédé comprenant les étapes suivantes :
- l'étape (40) de récupérer périodiquement les valeurs de tout ou partie des pixels de l'écran du terminal,
- l'étape (44, 46) de calculer, à partir de ces valeurs de pixels, un ou plusieurs paramètre(s) représentatif(s) du contenu de l'écran, et
- l'étape (48) de transférer ce (ou ces) paramètre(s) vers un moyen de sauvegarde et/ou d'analyse.

2. Procédé selon la revendication 1 dans lequel, pour récupérer les valeurs de pixels, on parcourt l'écran (10) du terminal selon un mode de parcours compris dans le groupe comprenant : parcours selon les lignes verticales, parcours selon les lignes horizontales, parcours selon des zones rectangulaires et parcours sous échantillonné dans lequel on ne récupère les valeurs que d'un pixel sur n, où n est un nombre entier positif.

3. Procédé selon l'une des revendications précédentes dans lequel l'étape de calcul comprend le calcul d'un taux de ressemblance de l'image affichée sur l'écran par rapport à une image de référence.

4. Procédé selon la revendication 3 dans lequel le calcul du taux de ressemblance tient compte d'une tolérance vis-à-vis de faibles variations dans la qualité des images.

5. Procédé selon la revendication 3 ou 4 comprenant une étape d'apprentissage au cours de laquelle des images reçues par le terminal sont répertoriées pour devenir des images de référence.

6. Procédé selon l'une des revendications 3 à 5 comprenant l'étape de calculer, à partir du taux de ressemblance, un taux de remplissage de l'écran.

7. Procédé selon l'une des revendications précédentes comprenant l'étape de déterminer une limite temporelle pour la récupération des valeurs de pixels servant au calcul du (ou des) paramètres.

8. Procédé selon l'une des revendications précédentes dans lequel l'étape de calcul est effectuée périodiquement afin d'établir une variation du (ou des) paramètre(s) dans le temps.

9. Procédé selon l'une des revendications précédentes comprenant l'étape préliminaire d'envoyer au terminal (16) des données (22) simulant.l'action d'un utilisateur sur ce terminal (16).

10. Procédé selon l'une des revendications précédentes dans lequel l'étape de calcul est effectuée par des moyens de calcul (30) intégrés dans le terminal.

11. Procédé selon l'une des revendications 1 à 10 dans lequel l'étape de calcul est effectuée par des moyens de calcul (20) externes au terminal.

## Claims

1. A method for testing a telecommunication network (10) by means of a terminal (16, 28), the terminal (16, 28) being fitted with a screen (42) and exchanging information via the telecommunication network (10), this method comprising the following steps:
- the step (40) of periodically retrieving the values of all or part of the terminal screen pixels,
- the step (44, 46) of calculating, based on these pixel values, one or several parameter(s) representing the screen content, and
- the step (48) of transmitting this (or these) parameter(s) to storage and/or analysis means.

2. A method according to claim 1 wherein, in order to retrieve the pixel values, the screen (10) of the terminal is scanned according to a scanning mode included in the group comprising: a vertical line scan, a horizontal line scan, a rectangular area scan and a downsampled scan in which the values of only one pixel from n are retrieved, where n is a positive integer.

3. A method according to one of the previous claims wherein the calculation step comprises the calculation of a rate of similarity of the image displayed on the screen compared to a reference image.

4. A method according to claim 3 wherein the calculation of the rate of similarity takes into account a margin of error with regard to small variations in image quality.

5. A method according to claim 3 or 4 comprising a learning step during which the images received by the terminal are indexed to become reference images.

6. A method according to one of claims 3 to 5 comprising the step of calculating a screen fill rate based on the rate of similarity.

7. A method according to one of the previous claims comprising the step of determining a time limit for the retrieval of pixel values used to calculate the parameter(s).

8. A method according to one of the previous claims wherein the calculation step is performed periodically so as to draw up a variation of the parameter(s) in time.

9. A method according to one of the pervious claims comprising the preliminary step of sending data (22) to the terminal (16), simulating the action of a user on this terminal (16).

10. A method according to one of the previous claims wherein the calculation step is performed by computing means (30) integrated into the terminal.

11. A method according to one of claims 1 to 10 wherein the calculation step is performed by computing means (20) external to the terminal.

## Patentansprüche

1. Prüfverfahren für ein Kommunikationsnetzwerk (10) über ein Terminal (16, 28), wobei das Terminal (16, 28) mit einem Bildschirm (42) ausgestattet ist und über das Kommunikationsnetzwerk (10) Informationen austauscht, und dieses Verfahren die folgenden Schritte umfasst:
- den Schritt (40) der regelmäßigen Sammlung der Werte aller Bildpunkte des Bildschirms des Terminals oder eines Teils davon,
- den Schritt (44, 46) der Berechnung eines oder mehrerer repräsentativer Parameter des Bildschirminhalts ausgehend von diesen Bildpunktwerten, und
- den Schritt der Übertragung dieses (dieser) Parameter(s) zur einer Vorrichtung zur Datensicherung und / oder Analyse.

2. Verfahren nach Anspruch 1, bei dem man den Bildschirm (10) des Terminals zum Sammeln der Bildpunktwerte entsprechend einem Durchlaufmodus durchläuft, der in der Gruppe mit den folgenden Modi enthalten ist: Durchlauf entlang der senkrechten Zeilen, Durchlauf entlang der waagrechten Zeilen, Durchlauf entlang der rechteckigen Bereiche und Durchlauf in Stichprobenform, bei der nur die Werte von jedem n. Bildpunkt aufgenommen werden, wobei n eine ganze positive Zahl ist.

3. Verfahren nach einem der vorherigen Ansprüche, bei dem der Rechenschritt die Berechnung einer Ähnlichkeitsquote des auf dem Bildschirm angezeigten Bildes in Bezug auf ein Referenzbild enthält.

4. Verfahren nach Anspruch 3, bei dem die Berechnung der Ähnlichkeitsquote eine Toleranz gegenüber geringen Abweichungen in der Bildqualität berücksichtigt.

5. Verfahren nach Anspruch 3 oder 4 mit einem Lernschritt, im Laufe dessen die vom Terminal empfangenen Bilder in einem Verzeichnis abgelegt werden, um zu Referenzbildern zu werden.

6. Verfahren nach einem der Ansprüche 3 bis 5 umfassend den Schritt zur Berechnung einer Ausfüllquote des Bildschirms ausgehend von der Ähnlichkeitsquote.

7. Verfahren nach einem der vorherigen Ansprüche mit einem Schritt zur Bestimmung einer zeitlichen Grenze zur Sammlung der Bildpunktwerte, die zur Berechnung des (der) Parameter(s) herangezogen werden.

8. Verfahren nach einem der vorherigen Ansprüche, bei dem der Rechenschritt in regelmäßigen Abständen erfolgt, um eine Variation des (der) Parameter(s) im Laufe der Zeit zu erstellen.

9. Verfahren nach einem der vorherigen Ansprüche umfassend den vorbereitenden Schritt der Sendung von Daten zum Terminal (16), die die Aktion eines Benutzers an diesem Terminal (16) simulieren.

10. Verfahren nach einem der vorherigen Ansprüche, bei dem der Rechenschritt anhand von Rechengeräten (30) durchgeführt wird, die im Terminal enthalten sind.

11. Verfahren nach einem der Ansprüche 1 bis 10, bei dem der Rechenschritt anhand von Rechengeräten (20) durchgeführt wird, die nicht Teil des Terminals sind.
